# EUROPÄISCHE PATENTSCHRIFT

(11) **EP 2 302 778 B1**
(45) Veröffentlichungstag und Bekanntmachung des Hinweises auf die Patenterteilung: **23.05.2012**
(21) Anmeldenummer: 10401126.7
(22) Anmeldetag: 03.08.2010
(51) Int. Cl.: H02M 5/257, H02P 7/295, H02P 27/16

(54) **Verfahren und Steuervorrichtung zur Leistungssteuerung eines Staubsaugers und Staubsauger mit einer solchen Steuervorrichtung**
Method and control device for controlling the output of a vacuum cleaner and vacuum cleaner with such a control device
Procédé et dispositif de commande pour la commande de puissance d'un aspirateur et aspirateur doté d'un tel dispositif de commande

(30) Priorität: 04.08.2009 DE 102009035964
(43) Veröffentlichungstag der Anmeldung: 30.03.2011
(73) Patentinhaber: Miele & Cie. KG, 33332 Gütersloh (DE)
(72) Erfinder: Schmedt, Andreas, 33428 Harsewinkel (DE)

(56) Entgegenhaltungen:
- DE-U1-202004 007 876
- JP-A- 11 075 393
- US-A1- 2007 075 668

## Beschreibung

Die Erfindung betrifft ein Verfahren zur Leistungssteuerung eines Staubsaugers mit einem Elektromotor und einem durch den Elektromotor angetriebenen Gebläse, wobei der Elektromotor mit einer sinusförmigen Wechselspannung versorgt wird, und wobei ein Phasenanschnittwinkel und/oder ein Phasenabschnittwinkel periodisch verändert werden. Sie bezieht sich weiter auf eine Steuervorrichtung zur Durchführung des Verfahrens.

Verfahren zur Leistungssteuerung von Staubsaugern sind allgemein bekannt. Die Einstellbarkeit der Leistungsaufnahme von Staubsaugern wird im Allgemeinen durch eine Phasenanschnittsteuerung, bei der der Strom verzögert nach einem Nulldurchgang der sinusförmigen Wechselspannung eingeschaltet wird und bis zum nächsten Nulldurchgang anliegt, realisiert. Das Einschalten des Stroms erfolgt also bei einem bestimmten Phasenwinkel der Sinuskurve der Wechselspannung, welcher im Weiteren zumeist als Phasenanschnittwinkel bezeichnet wird. Der sich durch die Phasenanschnittsteuerung einstellende Strom verursacht Oberwellen, auch als Harmonische bekannt, die sich nach der Fourier-Analyse bei ganzzahligen Vielfachen der Netzfrequenz, im Allgemeinen also bei Vielfachen von 50 Hertz (Hz), ergeben. Zulässige Höchstgrenzen der Amplituden der Oberwellen sind durch eine Norm vorgegeben. Diese Amplitude wird im Allgemeinen bei einem Phasenwinkel von 90 Grad plusminus 5 Grad gemessen. Die Einhaltung der Grenzwerte kann derzeit nur durch eine Beschränkung der maximal möglichen Leistungsaufnahme des eingesetzten Elektromotors und damit des Staubsaugers realisiert werden. Weniger häufig wird auch eine Phasenabschnittsteuerung eingesetzt, wobei der Strom nach dem Nulldurchgang sofort eingeschaltet und noch vor dem nächsten Nulldurchgang wieder ausgeschaltet wird. Alternativ zur Phasenanschnittsteuerung kann auch eine Phasenabschnittsteuerung verwendet werden. Die DE 20 2004 007 876 U1 zeigt beide Möglichkeiten.

Bekannt sind Verfahren, bei denen der Phasenanschnittwinkel variiert wird, um dadurch das Spektrum der Oberwellen zu verändern. Aus der EP 0 788 678 B1 ist beispielsweise ein Verfahren bekannt, bei dem aus einer bestimmten Anzahl unterschiedlicher Phasenanschnittwinkel jeweils ein Phasenanschnittwinkel für eine bestimmte Anzahl an Vollwellen der Wechselspannung angewendet wird. Die EP 0 859 452 B2 beschreibt ein Verfahren, bei dem der jeweilige Phasenanschnittwinkel um einen vorgegebenen, der gewünschten Leistungsaufnahme entsprechenden Sollwert herum nach größeren oder kleineren Werten variiert, wobei eine Unsymmetrie des Phasenanschnittwinkels zwischen zwei zeitlich aufeinanderfolgenden Vollwellen der Wechselspannung erzeugt wird. Aus der DE 197 06 909 A1 geht ein Verfahren hervor, bei denen der Phasenanschnittwinkel in aufeinanderfolgenden Vollwellen und/oder Halbwellen der Wechselspannung verändert werden. Die US 2007/0075668 A1, die als nächstliegender Stand der Technik betrachtet wird, zeigt ein Verfahren zur Steuerung eines Staubsaugergebläsemotors, bei dem eine Phasenanschnittsteuerung in der Weise variiert wird, dass einerseits in den Halbwellen unterschiedliche Anschnittswinkel verwendet werden und andererseits jede geradzahlige Vollwelle eine Spiegelung jeder ungeradzahligen darstellt. Die JP 11075393 zeigt ein verfahren, bei dem abwechselnd Vollwellen und angeschnittene Wellen zur Leistungssteuerung verwendet werden.

Bei den bekannten Verfahren wird jedoch nur eine teilweise Reduktion der Oberwellen erreicht, so dass immer noch eine Beschränkung der maximalen Leistungsaufnahme des Elektromotors nötig ist. Außerdem treten zum Teil bei den Verfahren unerwünschte Vibrationen auf.

Der Erfindung liegt daher die Aufgabe zugrunde, ein Verfahren zur Leistungssteuerung eines Staubsaugers anzugeben, mit dem die o. g. Nachteile vermieden oder zumindest in ihrer Auswirkung reduziert werden können.

Die Aufgabe wird erfindungsgemäß mit den Merkmalen des Anspruchs 1 gelöst. Dazu werden bei einem Verfahren zur Leistungssteuerung eines Staubsaugers mit einem Elektromotor und einem durch den Elektromotor angetriebenen Gebläse, wobei der Elektromotor mit einer sinusförmigen Wechselspannung versorgt wird, ein Phasenanschnitt und ein Phasenabschnitt der sinusförmigen Wechselspannung durchgeführt und sowohl ein Phasenanschnittwinkel als auch ein Phasenabschnittwinkel periodisch verändert. Die Veränderung des Phasenanschnittwinkels und des Phasenabschnittwinkels kehrt also periodisch in irgendeiner Vollwelle der sinusförmigen Wechselspannung wieder, also z.B. in der zweiten und/oder dritten und/oder vierten (usw.) Vollwelle.

Zur Lösung der Aufgabe sind des Weiteren eine Steuervorrichtung für einen Elektromotor zum Antrieb eines Gebläses in einem Staubsauger nach dem unabhängigen Anspruch 7 sowie ein Staubsauger mit einer solchen Steuervorrichtung gemäß Anspruch 12 vorgesehen.

Der Vorteil der Erfindung besteht darin, dass durch die periodisch veränderte Ansteuerung des Elektromotors ein Ansteuerungssignal mit einer geänderten, kleineren Frequenz erzeugt wird, so dass auch für ganzzahlige Vielfache dieser Frequenz Oberwellen erzeugt werden und sich dadurch eine verbesserte Stromverteilung auf die einzelnen Oberwellen ergibt. Durch die Kombination von Phasenanschnitt und Phasenabschnitt ergeben sich besonders viele Variationsmöglichkeiten bei der Ansteuerung, so dass diese für eine möglichst starke oder sogar vollständige Verringerung der Amplituden der Oberwellen bei ganzzahligen Vielfachen von 50 Hz, insbesondere bei kritischen Oberwellen von 150 Hz, optimal konfiguriert werden kann. Dadurch kann der Staubsauger mit einer höheren Leistungsaufnahme betrieben und Vibrationen, beispielsweise des Gebläses, können vermieden oder zumindest gezielt reduziert werden.

Vorteilhafte Ausgestaltungen der Erfindung sind Gegenstand der Unteransprüche. Dabei verwendete Rückbeziehungen weisen auf die weitere Ausbildung des Gegenstands des Hauptanspruchs durch die Merkmale des jeweiligen Unteranspruchs hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt werden der Phasenanschnittwinkel und der Phasenabschnittwinkel in jeder zweiten Vollwelle der sinusförmigen Wechselspannung verändert. Dadurch wird ein Ansteuerungssignal mit einer Frequenz von 25 Hz erzeugt, da sich die Periodendauer des Ansteuerungssignals auf zwei Vollwellen verlängert. Die Amplituden der Oberwellen bei Vielfachen von 50 Hz werden somit reduziert, da auch bei Vielfachen von 25 Hz Oberwellen entstehen, so dass eine andere Verteilung der Amplituden der einzelnen Oberwellen erreicht wird.

Bevorzugt werden der Phasenanschnittwinkel und/oder der Phasenabschnittwinkel einer zweiten Halbwelle gegenüber einer ersten Halbwelle derselben Vollwelle verändert. Hierdurch wird eine weitere Reduktion der Amplituden der Oberwellen bei ganzzahligen Vielfachen von 50 Hz, vor allem bei 150 Hz, erreicht.

Bevorzugt wird in der ersten Vollwelle ein Phasenanschnitt oder Phasenabschnitt und in der zweiten Vollwelle ein Phasenabschnitt bzw. Phasenanschnitt durchgeführt. Es werden also z. B. bei zwei aufeinanderfolgenden Vollwellen in der ersten Vollwelle ein Phasenanschnitt und in der zweiten Vollwelle ein Phasenabschnitt durchgeführt oder es wird in der ersten Vollwelle ein Phasenabschnitt und in der zweiten Vollwelle ein Phasenanschnitt durchgeführt. Auch hiermit lassen sich die Amplituden der Oberwellen bei ganzzahligen Vielfachen von 50 Hz weiter reduzieren; im Optimalfall können Amplituden kritischer Oberwellen, wie z. B. bei 150 Hz, auf Null gesenkt werden.

Bevorzugt wird zur Ansteuerung des Elektromotors ein Zündwinkel, aus dem ein Phasenanschnittwinkel abgeleitet wird, abgerufen und in Abhängigkeit von diesem Zündwinkel oder von einem Über- oder Unterschreiten eines vorgegebenen oder vorgebbaren Schwellwerts durch diesen Zündwinkel eine Veränderung des Phasenanschnittwinkels und/oder des Phasenabschnittwinkels bestimmt. Dazu existiert im ersteren Fall zu jedem Zündwinkel ein vorgegebener oder vorgebbarer Wert, z. B. in einer Tabelle, mit dem der Phasenanschnittwinkel und/oder der Phasenabschnittwinkel beaufschlagt wird, um eine optimale Ansteuerung zu gewährleisten. Im zweiten Fall wird der Phasenanschnitt-und/oder Phasenabschnittwinkel nur dann verändert, wenn der Zündwinkel einen vorgegebenen oder vorgebbaren Schwellwert über- oder unterschreitet. Der Schwellwert liegt z. B. in einem Bereich, in dem besonders starke Oberwellen, d. h. Oberwellen mit großer Amplitude, erzeugt werden, wenn der Elektromotor mit einem Phasenanschnitt- und/oder Phasenabschnittwinkel in diesem Bereich angesteuert wird. Im ersten wie im zweiten Fall wird die Veränderung des Phasenanschnitt- und/oder Phasenabschnittwinkels gezielt dann vorgenommen, wenn der Zündwinkel solche Werte annimmt, bei denen ein Einschalten oder Abschalten des Stroms ungünstig wäre, da sich zu hohe Amplituden der Oberwellen bei ganzzahligen Vielfachen von 50 Hz ergeben würden.

Bevorzugt ist vorgesehen, dass der Schwellwert in der Nähe von Vielfachen von 90 Grad, insbesondere im Bereich von 85 bis 95 Grad, liegt. Liegt der Zündwinkel in diesem Bereich, ergeben sich hohe Amplituden der Oberwellen, nach denen auch die Grenzwerte der Norm festgelegt werden. Daher ist eine Änderung des Phasenanschnitt- und/oder Phasenabschnittwinkels bei Abruf eines Zündwinkels bei diesen Werten besonders vorteilhaft.

Die oben bereits erwähnte Steuervorrichtung für einen Elektromotor zum Antrieb eines Gebläses in einem Staubsauger, mit der die o. g. Aufgabe mit dem jetzt beschriebenen Verfahren und dessen Ausgestaltungen gelöst wird, zeichnet sich in vorteilhaften Ausführungsformen im Wesentlichen durch Mittel aus, die zum Ausführen einzelner Verfahrensschritte, die von dem Verfahren und dessen Ausgestaltungen umfasst sind, vorgesehen sind. Insoweit kann im Wesentlichen auf die vorangehende Beschreibung des Verfahrens und dessen Ausgestaltungen verwiesen werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand führen.

Es zeigen
- Fig. 1: schematisch vereinfacht einen Staubsauger mit einer Steuervorrichtung gemäß der Erfindung,
- Fig. 2: eine graphische Darstellung des Spannungsverlaufs der sinusförmigen Wechselspannung zur Ansteuerung des Elektromotors bei nicht verändertem Phasenanschnitt (Stand der Technik),
- Fig. 3: das aus der Ansteuerung gemäß Fig. 2 resultierende Spektrum der Amplituden der Ströme der Oberwellen (Stand der Technik),
- Fig. 4: eine graphische Darstellung des Spannungsverlaufs der sinusförmigen Wechselspannung zur Ansteuerung des Elektromotors bei verändertem Phasenanschnitt (Stand der Technik),
- Fig. 5: das aus der Ansteuerung gemäß Fig. 4 resultierende Spektrum der Amplituden der Ströme der Oberwellen (Stand der Technik),
- Fig. 6: eine graphische Darstellung des Spannungsverlaufs der sinusförmigen Wechselspannung zur Ansteuerung des Elektromotors mit verändertem Phasenanschnitt und -abschnitt gemäß der Erfindung,
- Fig. 7: das aus der Ansteuerung gemäß Fig. 6 resultierende Spektrum der Amplituden der Ströme der Oberwellen,
- Fig. 8: eine graphische Darstellung des Spannungsverlaufs der sinusförmigen Wechselspannung zur Ansteuerung des Elektromotors als weiteres Beispiel für einen veränderten Phasenanschnitt und -abschnitt,
- Fig. 9: das aus der Ansteuerung gemäß Fig. 8 resultierende Spektrum der Amplituden der Ströme der Oberwellen,
- Fig. 10: eine graphische Darstellung des Spannungsverlaufs der sinusförmigen Wechselspannung zur Ansteuerung des Elektromotors als weiteres Beispiel für einen veränderten Phasenanschnitt und -abschnitt und
- Fig. 11: das aus der Ansteuerung gemäß Fig. 10 resultierende Spektrum der Amplituden der Ströme der Oberwellen.

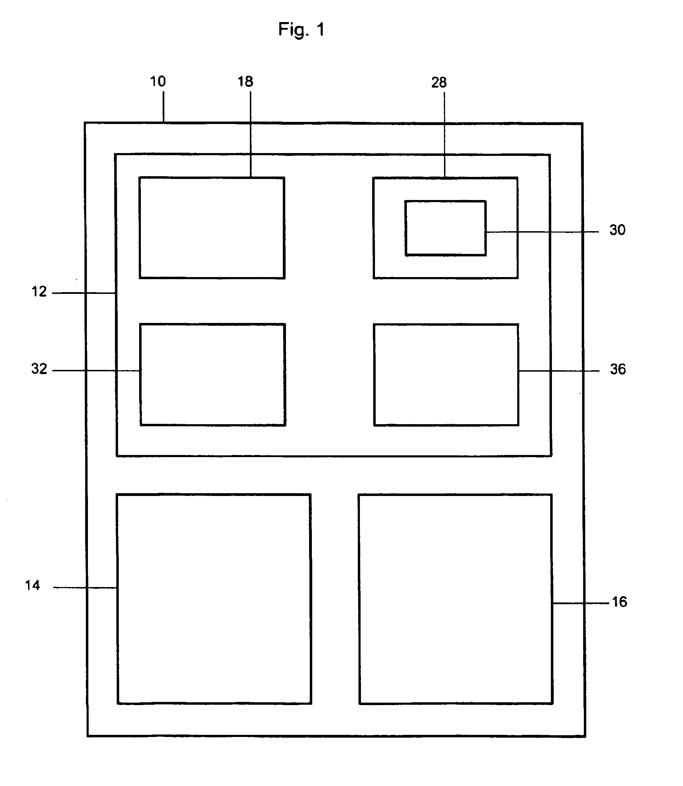

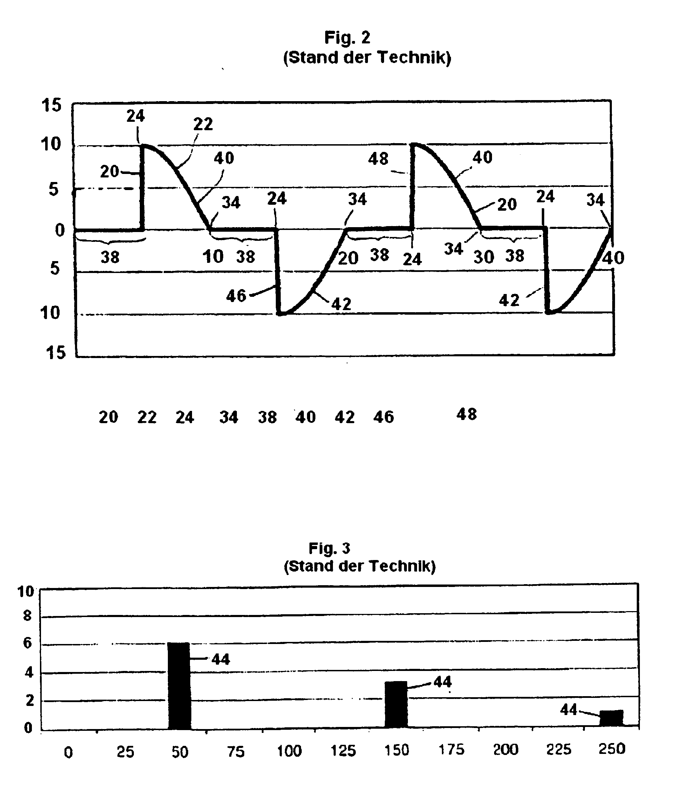

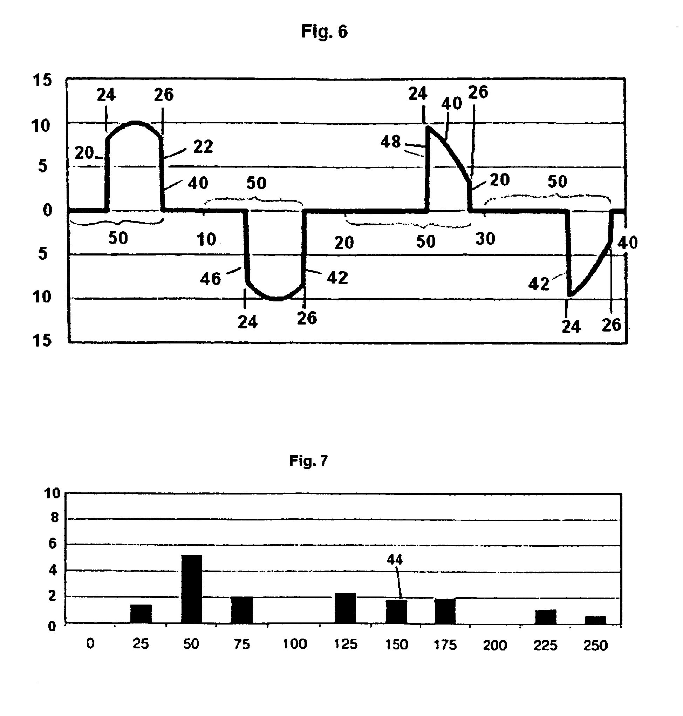

Fig. 1 zeigt schematisch vereinfacht einen Staubsauger 10 mit einer Steuervorrichtung 12 für einen Elektromotor 14 zum Antrieb eines Gebläses 16. Die Steuervorrichtung 12 umfasst eine Schaltung 18 zur Durchführung eines Phasenanschnitts und/oder eines Phasenabschnitts in Vollwellen 20 (Fig. 2) einer sinusförmigen Wechselspannung 22 (Fig. 2) bei einem Phasenanschnittwinkel 24 (Fig. 2) und/oder einem Phasenabschnittwinkel 26 (Fig. 6) zur Ansteuerung des Elektromotors 14. Eine solche Schaltung 18 umfasst z. B. einen Triac (Zweirichtungs-Thyristortriode) für die Phasenanschnittsteuerung und abschaltbare Thyristoren oder Power-MOSFET-Transistoren für die Phasenabschnittsteuerung. Des Weiteren umfasst die Steuervorrichtung 12 Mittel 28 zur periodischen Veränderung des Phasenanschnittwinkels 24 und/oder des Phasenabschnittwinkels 26. Die Mittel 28 zur periodischen Veränderung des Phasenanschnittwinkels 24 und/oder des Phasenabschnittwinkels 26 umfassen in dem in Fig. 1 gezeigten Beispiel weitere Mittel 30, die zur Veränderung des Phasenanschnittwinkels 24 und des Phasenabschnittwinkels 26 in jeder zweiten Vollwelle 20 der sinusförmigen Wechselspannung 22 dienen. Mit einem von der Steuervorrichtung 12 umfassten Mikroprozessor 32 wird ein Zündwinkel, von dem ein Phasenanschnittwinkel 24 abgeleitet wird, d. h. dem Winkel der Sinuskurve der Wechselspannung 22, bei dem der Strom nach einem Nulldurchgang 34 (Fig. 2) der Wechselspannung 22 eingeschaltet wird und bis zum nächsten Nulldurchgang 34 anliegt, aus einem von der Steuervorrichtung 12 umfassten Speicher 36 abgerufen. In Abhängigkeit von diesem Zündwinkel wird eine Veränderung des Phasenanschnittwinkels 24 und/oder des Phasenabschnittwinkels 26 bestimmt, d. h. für jeden Zündwinkel existiert ein vorgegebener oder vorgebbarer Wert, mit dem der Phasenanschnittwinkel 24 und/oder der Phasenabschnittwinkel 26 beaufschlagt wird, um Amplituden von Oberwellen bestimmter Frequenzen, insbesondere 150 Hz, zu reduzieren. Alternativ kann der Phasenanschnitt- oder Phasenabschnittwinkel 24, 26 auch nur dann verändert werden, wenn der Zündwinkel einen vorgegebenen oder vorgebbaren Schwellwert über- oder unterschreitet. Dieser Grenzwert kann beispielsweise in der Nähe von Vielfachen von 90 Grad liegen, vor allem sind jedoch bei Zündwinkeln im Bereich von 85 bis 95 Grad bestimmte Grenzwerte zur Einhaltung gesetzlicher Normen zu berücksichtigen, so dass der Schwellwert in diesem Bereich liegen sollte, damit der Phasenanschnitt- und/oder Phasenabschnittwinkel 24, 26 entsprechend verändert wird.

Fig. 2 zeigt eine graphische Darstellung des Spannungsverlaufs der sinusförmigen Wechselspannung 22 zur Ansteuerung des Elektromotors 14. Auf der Abszisse ist die Zeit in Millisekunden (ms) dargestellt. Die Ansteuerung entspricht einer Phasenanschnittsteuerung gemäß dem Stand der Technik, bei der der Strom verzögert nach einem Nulldurchgang 34 der Wechselspannung 22 eingeschaltet wird und bis zum nächsten Nulldurchgang 34 anliegt. Eine erste Zeitspanne 38, nach der der Strom eingeschaltet wird, entspricht einem Winkel gemäß der Sinuskurve der Wechselspannung 22, welcher als Phasenanschnittwinkel 24 bezeichnet wird. In Fig. 1 wird der Phasenanschnitt nicht verändert, d. h., der Phasenanschnittwinkel 24 ist in jeder ersten Halbwelle 40 aufeinanderfolgender Vollwellen 20 gleich und entspricht außerdem dem negativen Wert des Phasenanschnittwinkels 24 in jeder zweiten Halbwelle 42 aufeinanderfolgender Vollwellen 20. Der Phasenanschnittwinkel 24 entspricht hier in etwa 90 Grad in der jeweils ersten und 270 bzw. -90 Grad in der jeweils zweiten Halbwelle 42. Die Periodendauer der Schwingung entspricht also der Dauer von einer Vollwelle 20.

Fig. 3 zeigt das zu der in Fig. 2 gezeigten Phasenanschnittsteuerung korrespondierende Amplitudenspektrum der Oberwellen der Ströme, wobei auf der Abszisse die Frequenz in Hertz (Hz) angegeben ist. Die Frequenz des Ansteuerungssignals entspricht 50 Hz gemäß der Netzspannung. Oberwellen treten mit Frequenzen von ganzzahligen Vielfachen von 50 Hz auf, vor allem bei den ungeradzahligen Vielfachen wie 50 Hz, 150 Hz und 250 Hz. Die Oberwellen mit Frequenzen von 150 Hz werden als kritische Oberwellen bezeichnet. Eine Amplitude 44 dieser Oberwellen sollte möglichst gering sein, um die durch die gesetzlichen Normen vorgegebenen Grenzwerte einzuhalten.

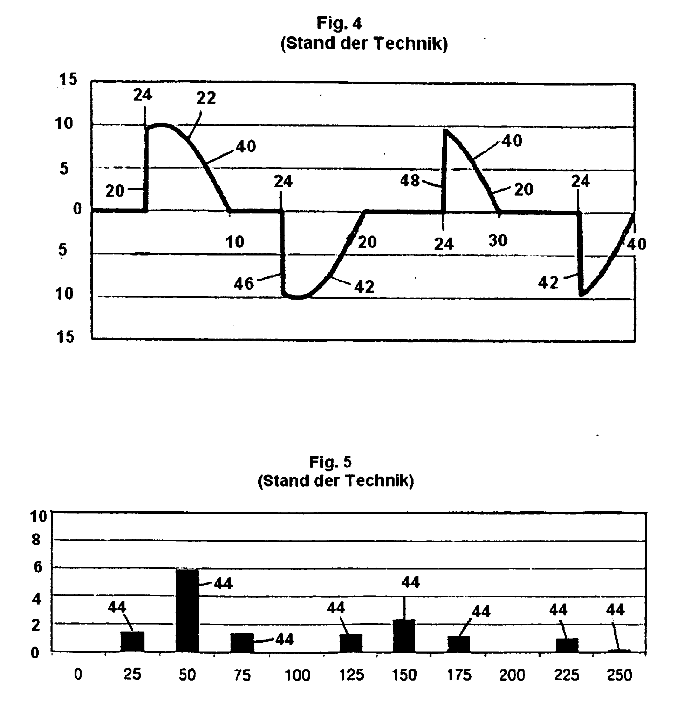

Auch in Fig. 4 ist ein Kurvenverlauf der Wechselspannung 22 einer Phasenanschnittsteuerung, die im Stand der Technik angewendet wird, um die Amplituden 44 (Fig. 2) der Oberwellen zu reduzieren, graphisch dargestellt. Der Nulldurchgang 34 (Fig. 2) und die erste Zeitspanne 38 (Fig. 2) sind darin aufgrund der Übersichtlichkeit nicht mehr angezeigt. Bei dieser Ansteuerung wird der Phasenanschnitt verändert, d. h. der Betrag des Phasenanschnittwinkels 24 einer ersten Vollwelle 46 unterscheidet sich von dem Betrag des Phasenanschnittwinkels 24 der zweiten Vollwelle 48. Dieser Phasenanschnitt soll sich bei der dritten und vierten Vollwelle wiederholen (hier nicht dargestellt), so dass diese der ersten und zweiten Vollwelle 46, 48 gleichen und somit insgesamt eine Schwingungsperiode mit zwei Vollwellen 20 entsteht. Dadurch entspricht die Frequenz des Ansteuerungssignals einer Frequenz von 25 Hz anstatt 50 Hz, da die Dauer der Schwingungsperiode doppelt so lang ist. Die Veränderung des Phasenanschnitts führt somit auch eine Erzeugung von Oberwellen bei ganzzahligen Vielfachen von 25 Hz mit sich.

In dem in Fig. 5 gezeigten, zu Fig. 4 korrespondierenden Spektrum der Oberwellenamplituden treten daher nun auch Amplituden 44 bei ganzzahligen Vielfachen von 25 Hz auf. Die Amplitude 44 der kritischen Oberwellen bei 150 Hz ist nun etwas geringer gegenüber der Amplitude 44 bei 150 Hz in Fig. 3.

In Fig. 6 wird nun ein Beispiel für den Kurvenverlauf der Wechselspannung 22 bei einer Phasenanschnittsteuerung kombiniert mit einer Phasenabschnittsteuerung 26 gemäß der Erfindung gezeigt. Darin wird neben dem Phasenanschnittwinkel 24 auch noch ein Phasenabschnittwinkel 26 verändert, wobei der Phasenabschnittwinkel 26 dem Winkel gemäß der Sinuskurve der Wechselspannung 22 entspricht, zu dem der Strom zur Ansteuerung des Elektromotors 14 (Fig. 1) ausgeschaltet wird. In Fig. 6 ist nun ein gegenüber der ersten Vollwelle 46 veränderter Phasenanschnittwinkel 24 und Phasenabschnittwinkel 26 in der zweiten Vollwelle 48 gezeigt. Der Phasenanschnittwinkel 24 entspricht in dem Beispiel in Fig. 6 in der ersten Halbwelle 40 einer ersten Zeitspanne 38 (Fig. 2) von 3 ms und der Phasenabschnittwinkel 26 einer zweiten Zeitspanne 50 von 7 ms. Eine Halbwelle 40 hat eine Dauer von 10 ms. Der Phasenanschnittwinkel 24 in der zweiten Halbwelle 42 entspricht ebenfalls etwa der ersten Zeitspanne 38 von 3 ms und der Phasenabschnittwinkel 26 der zweiten Zeitspanne 50 von 7 ms, jeweils ab Beginn der zweiten Halbwelle 42. In der zweiten Vollwelle 48 entspricht der Phasenanschnittwinkel 24 einer ersten Zeitspanne 38 von 6 ms in der ersten und zweiten Halbwelle 40, 42, und der Phasenabschnittwinkel 26 entspricht einer zweiten Zeitspanne 50 von 9 ms in der ersten und zweiten Halbwelle 40, 42, jeweils ab Beginn der ersten Halbwelle 40 bzw. zweiten Halbwelle 42. Diese kombinierte Phasenanschnitt- und Phasenabschnittsteuerung soll sich in der der dritten und vierten Vollwelle 20 wiederholen (hier nicht dargestellt), so dass sich eine Periodendauer von zwei Vollwellen 20 ergibt und somit, wie bereits in Verbindung mit Fig. 4 beschrieben, Oberwellen bei ganzzahligen Vielfachen von 25 Hz entstehen. Die Amplituden 44 der Oberwellen sind in Fig. 7 gezeigt, wobei aufgrund der Übersichtlichkeit nur eine der acht gezeigten Amplituden 44, nämlich die bei 150 Hz, mit einem Bezugszeichen versehen ist. Die Amplitude 44 der kritischen Oberwellen bei 150 Hz ist gegenüber der in Fig. 5 gezeigten Amplitude 44 noch einmal verringert.

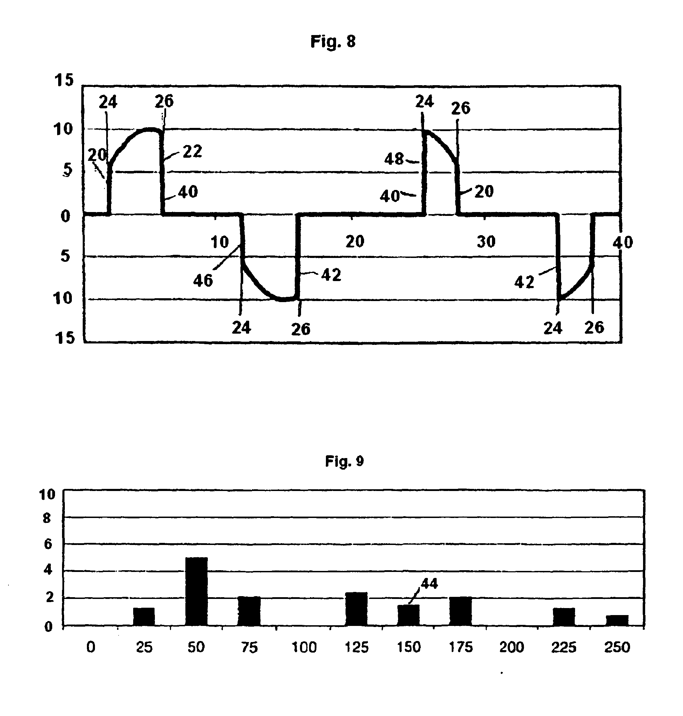

In Fig. 8 ist ein weiteres Beispiel für einen Kurvenverlauf der Wechselspannung 22 bei einer Phasenanschnittsteuerung kombiniert mit einer Phasenabschnittsteuerung gemäß einer besonderen Ausführungsform der Erfindung gezeigt. Bei dieser Phasenanschnitt- und Phasenabschnittsteuerung ist nun der Phasenanschnittwinkel 24 der ersten Halbwelle 40 der ersten Vollwelle 46 ein anderer als der Phasenanschnittwinkel 24 der zweiten Halbwelle 42 der ersten Vollwelle 48. Die erste Zeitspanne 38 (Fig. 2) des Phasenanschnittwinkels 24 beträgt etwa 3 ms in der ersten Halbwelle 40 und etwa 2 ms in der zweiten Halbwelle 42. Der Phasenabschnittwinkel 26 entspricht in beiden Halbwellen 40, 42 einer zweiten Zeitspanne 50 (Fig. 6) von 6 ms ab Beginn der jeweiligen Halbwelle 40, 42. In der zweiten Vollwelle 48 sind Phasenanschnitt- und Phasenabschnittwinkel 24, 26 in jeder der Halbwellen 40, 42 gleich, aber gegenüber der ersten Vollwelle 46 verändert. Somit ergibt sich bei Wiederholung dieser Ansteuerung über jeweils zwei Vollwellen 46, 48 wieder eine Periodendauer von 25 Hz und entsprechende Oberwellen. Gemäß Fig. 9 lässt sich mit dieser Ansteuerung die Amplitude 44 der kritischen Oberwellen bei 150 Hz im Vergleich zu Fig. 7 noch weiter reduzieren.

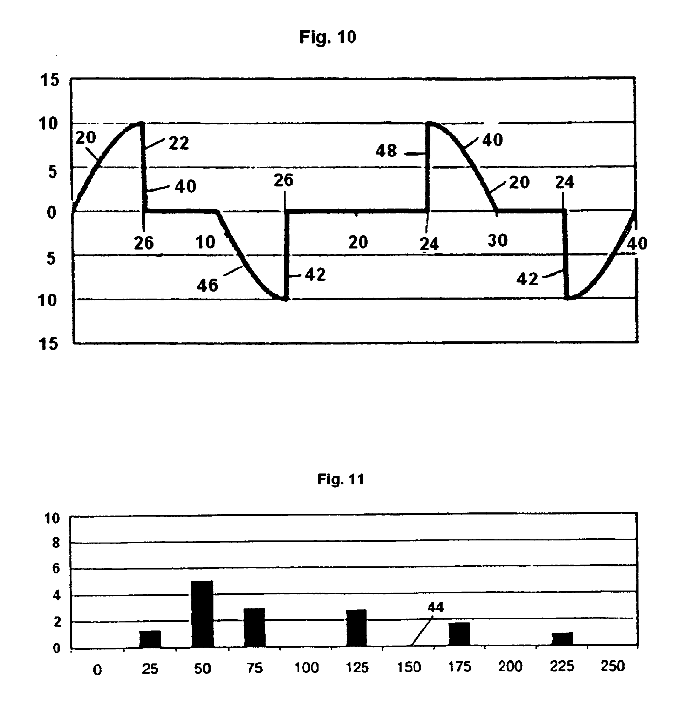

Fig. 10 zeigt ein weiteres Beispiel für einen Kurvenverlauf der Wechselspannung 22 bei einer Phasenanschnittsteuerung kombiniert mit einer Phasenabschnittsteuerung gemäß einer weiteren Ausführungsform der Erfindung. Darin ist eine Ansteuerung gezeigt, bei der in der ersten Vollwelle 46 in jeder Halbwelle 40, 42 nur ein Phasenabschnitt durchgeführt wird, d. h. der Phasenanschnittwinkel 24 existiert nicht oder ist gleich 0 Grad bzw. 180 Grad, welches einer ersten Zeitspanne 38 (Fig. 2) von 0 ms bezüglich jeder Halbwelle 40, 42 der ersten Vollwelle 46 entspricht. Der Phasenabschnitt findet in beiden Halbwellen 40, 42 der ersten Vollwelle 46 nach einer zweiten Zeitspanne 50 von 5 ms statt. Dies entspricht einem Phasenabschnittwinkel 26 von 90 Grad bzw. 270 Grad. In der zweiten Vollwelle 48 wird nur ein Phasenanschnitt durchgeführt, die Einschaltung des Stroms erfolgt bei einem Phasenanschnittwinkel 24 von 90 Grad bzw. 270 Grad. Eine Wiederholung dieser Ansteuerung ist für die dritte und vierte Vollwelle 20 sowie folgende Vollwellen 20 vorgesehen, so dass eine Periodendauer von zwei Vollwellen 20 entsteht. Mit dieser Ansteuerung kann die Amplitudenhöhe der Oberwellen bei 150 Hz im Idealfall auf Null gesenkt werden, wie in Fig. 11 gezeigt wird.

In den oben beschriebenen Figuren 6, 8 und 10 unterscheidet sich die Phasenanschnitt- und Phasenabschnittsteuerung jeweils in zwei aufeinanderfolgenden Vollwellen 46, 48 und das Ansteuerungsmuster wiederholt sich jeweils nach zwei Vollwellen 46, 48, so dass, wie bereits beschrieben, eine Periodendauer von zwei Vollwellen 20 erzeugt wird. Es ist aber genauso möglich, dass sich ein Phasenanschnitt und/oder Phasenabschnitt erst in einer dritten oder vierten oder einer darauffolgenden Vollwelle 20 im Vergleich zu einer ersten Vollwelle 46 unterscheidet und sich daraus eine Periodendauer von drei, vier oder noch mehr Vollwellen 20 ergibt. Auf diese Weise wird die Frequenz des Ansteuerungssignals noch weiter verkleinert, z. B. auf etwa 33,3 Hz oder 12,5 Hz. Eine Verteilung der Oberwellen auf Vielfache von z. B. 33,3 Hz oder 12,5 Hz sind dann die Folge, wodurch sich gegebenenfalls weitere vorteilhafte Reduzierungen der Amplitude 44 (Fig. 3) der kritischen Oberwellen, z. B. bei 150 Hz, ergeben. Außerdem können auch in drei, vier, fünf, usw. aufeinanderfolgenden Vollwellen 20 jeweils voneinander verschiedene Phasenanschnitte und Phasenabschnitte durchgeführt werden. Dadurch verändert sich jeweils die Periodendauer und damit die Frequenz des Ansteuerungssignals, woraus sich wiederum Oberwellen bei bestimmten Frequenzen ergeben und dies erwünschte Reduzierungen der Amplitude 44 der kritischen Oberwellen bei 150 Hz mit sich führen kann.

Damit lässt sich die Erfindung kurz wie folgt darstellen: Es wird ein Verfahren zur Leistungssteuerung eines Staubsaugers 10 mit einem Elektromotor 14 und einem durch den Elektromotor 14 angetriebenen Gebläse 16, wobei der Elektromotor 14 mit einer sinusförmigen Wechselspannung 22 versorgt wird, angegeben, bei dem ein Phasenanschnitt und ein Phasenabschnitt der sinusförmigen Wechselspannung 22 durchgeführt werden und ein Phasenanschnittwinkel 24 und/oder Phasenabschnittwinkel 26 periodisch verändert werden:

## Patentansprüche

1. Verfahren zur Leistungssteuerung eines Staubsaugers (10) mit einem Elektromotor (14) und einem durch den Elektromotor (14) angetriebenen Gebläse (16), wobei der Elektromotor (14) mit einer sinusförmigen Wechselspannung (22) versorgt wird, und wobei ein Phasenanschnittwinkel (24) und/oder ein Phasenabschnittwinkel (26) periodisch verändert werden,
**dadurch gekennzeichnet,**
**dass** ein Phasenanschnitt und ein Phasenabschnitt der sinusförmigen Wechselspannung (22) durchgeführt werden und dass sowohl der Phasenanschnittwinkel (24) als auch der Phasenabschnittwinkel (26) periodisch verändert werden.

2. Verfahren nach Anspruch 1,
**dadurch gekennzeichnet,**
**dass** der Phasenanschnittwinkel (24) und der Phasenabschnittwinkel (26) in jeder zweiten Vollwelle (20) der sinusförmigen Wechselspannung (22) verändert werden.

3. Verfahren nach Anspruch 1 oder 2,
**dadurch gekennzeichnet,**
**dass** der Phasenanschnittwinkel (24) und/oder Phasenabschnittwinkel (26) einer zweiten Halbwelle (42) gegenüber einer ersten Halbwelle (40) derselben Vollwelle (20) verändert werden.

4. Verfahren nach Anspruch 2 oder 3,
**dadurch gekennzeichnet,**
**dass** in der ersten Vollwelle (46) ein Phasenanschnitt oder Phasenabschnitt und in der zweiten Vollwelle (48) ein Phasenabschnitt bzw. Phasenanschnitt durchgeführt wird.

5. Verfahren nach einem der vorangehenden Ansprüche,
**dadurch gekennzeichnet,**
**dass** zur Ansteuerung des Elektromotors (14) ein Zündwinkel, der einem Phasenanschnittwinkel (24) entspricht, abgerufen wird und in Abhängigkeit von diesem Zündwinkel oder von einem Über- oder Unterschreiten eines vorgegebenen oder vorgebbaren Schwellwerts durch diesen Zündwinkel eine Veränderung des Phasenanschnittwinkels (24) und/oder des Phasenabschnittwinkels (26) bestimmt wird.

6. Verfahren nach Anspruch 5, mit einem Schwellwert in der Nähe von Vielfachen von 90 Grad, insbesondere im Bereich von 85 bis 95 Grad.

7. Steuervorrichtung (12) für einen Elektromotor (14) zum Antrieb eines Gebläses (16) in einem Staubsauger (10), wobei der Elektromotor (14) mit einer sinusförmigen, Wechselspannung (22) betreibbar ist, **dadurch gekennzeichnet, dass** die Steuervorrichtung (12) eine Schaltung (18) zum Phasenanschnitt und Phasenabschnitt der sinusförmigen Wechselspannung (22) bei einem Phasenanschnitt-und einem Phasenabschnittwinkel (26) zur Ansteuerung des Elektromotors (14) und Mittel (28, 30) zur periodischen Veränderung sowohl des Phasenanschnittwinkels (24) als auch des Phasenabschnittwinkels (26) aufweist.

8. Steuervorrichtung (12) nach Anspruch 7, mit Mitteln (28, 30) zur Veränderung des Phasenanschnittwinkels (24) und des Phasenabschnittwinkels (26) in jeder zweiten Vollwelle (20) der sinusförmigen Wechselspannung (22).

9. Steuervorrichtung (12) nach Anspruch 7 oder 8, mit Mitteln (28, 30) zur Veränderung des Phasenanschnittwinkels (24) und des Phasenabschnittwinkels (26) einer zweiten Halbwelle (42) gegenüber einer ersten Halbwelle (40) derselben Vollwelle (20).

10. Steuervorrichtung (12) nach einem der Ansprüche 7 bis 9, mit Mitteln (28, 30) zur Durchführung eines Phasenanschnitts oder Phasenabschnitts in einer ersten Vollwelle (46) und eines Phasenabschnitts bzw. Phasenanschnitts in der zweiten Vollwelle (48).

11. Steuervorrichtung (12) nach einem der Ansprüche 7 bis 10, mit einem Mikroprozessor (32) zum Abrufen eines Zündwinkels, der einem Phasenanschnittwinkel (24) entspricht, aus einem von der Steuervorrichtung (12) umfassten Speicher (36) und zur Bestimmung der Veränderung des Phasenanschnittwinkels (24) und/oder des Phasenabschnittwinkels (26) in Abhängigkeit von diesem Zündwinkel oder von einem Über- oder Unterschreiten eines vorgegebenen oder vorgebbaren Schwellwerts durch diesen Zündwinkel.

12. Staubsauger (10) mit einem Elektromotor (14) und einem durch den Elektromotor (14) angetriebenen Gebläse (16), **gekennzeichnet durch** eine Steuervorrichtung (12) nach einem der Ansprüche 7 bis 11 für den Elektromotor (14).

## Claims

1. Method for power control of a vacuum cleaner (10) comprising an electric motor (14) and a fan (16) driven by the electric motor (14), the electric motor (14) being supplied by a sinusoidal alternating voltage (22), and a leading phase angle (24) and/or a trailing phase angle (26) being periodically changed,
**characterised in that**
a leading phase and a trailing phase of the sinusoidal alternating voltage (22) are executed, and **in that** both the leading phase angle (24) and the trailing phase angle (26) are periodically changed.

2. Method according to claim 1,
**characterised in that**
the leading phase angle (24) and the trailing phase angle (26) are changed in every second full wave (20) of the sinusoidal alternating voltage (22).

3. Method according to either claim 1 or claim 2,
**characterised in that**
the leading phase angle (24) and/or trailing phase angle (26) of a second half wave (42) is/are changed in relation to a first half wave (40) of the same full wave (20).

4. Method according to either claim 2 or claim 3,
**characterised in that**
a leading phase or trailing phase is executed in the first full wave (46) and a trailing phase or a leading phase, respectively, is executed in the second full wave (48).

5. Method according to any one of the preceding claims,
**characterised in that**
to control the electric motor (14) a firing angle, which corresponds to a leading phase angle (24), is called and, as a function of this firing angle or when this firing angle exceeds or falls short of a predefined or preset threshold value, a change of the leading phase angle (24) and/or of the trailing phase angle (26) is determined.

6. Method according to claim 5, having a threshold value near to multiples of 90 degrees, in particular in the range of 85 to 95 degrees.

7. Control device (12) for an electric motor (14) for driving a fan (16) in a vacuum cleaner (10), the electric motor (14) being operable by a sinusoidal alternating voltage (22), **characterised in that** the control device (12) comprises a switch (18) for the leading phase and trailing phase of the sinusoidal alternating voltage (22) in the case of a leading phase angle and a trailing phase angle (26) for controlling the electric motor (14) and means (28, 30) for the periodic change of both the leading phase angle (24) and the trailing phase angle (26).

8. Control device (12) according to claim 7, comprising means (28, 30) for changing the leading phase angle (24) and the trailing phase angle (26) in every second full wave (20) of the sinusoidal alternating voltage (22).

9. Control device (12) according to claim 7 or claim 8, comprising means (28, 30) for changing the leading phase angle (24) and the trailing phase angle (26) of a second half wave (42) in relation to a first half wave (40) of the same full wave (20).

10. Control device (12) according to any one of claims 7 to 9, comprising means (28, 30) for executing a leading phase or trailing phase in a first full wave (46) and a trailing phase or leading phase, respectively, in the second full wave (48).

11. Control device (12) according to any one of claims 7 to 10, comprising a microprocessor (32) for calling a firing angle, which corresponds to a leading phase angle (24), from a memory (36) comprised by the control device (12), and for determining the change of the leading phase angle (24) and/or of the trailing phase angle (26) as a function of this firing angle or when this firing angle exceeds or falls short of a predefined or preset threshold value.

12. Vacuum cleaner (10) comprising an electric motor (14) and a fan (16) driven by the electric motor (14), **characterised by** a control device (12) according to any one of claims 7 to 11 for the electric motor (14).

## Revendications

1. Procédé de commande de puissance d'un aspirateur (10) avec un moteur électrique (14) et un ventilateur (16) entraîné par le moteur électrique (14), le moteur électrique (14) étant alimenté par une tension alternative (22) sinusoïdale, et un angle de début de phase (24) et un angle de fin de phase (26) étant modifiés périodiquement,
**caractérisé en ce qu'**un début de phase et une fin de phase de la tension alternative (22) sinusoïdale sont exécutés, et **en ce que** l'angle de début de phase (24) ainsi que l'angle de fin de phase (26) sont modifiés périodiquement.

2. Procédé selon la revendication 1,
**caractérisé en ce que**
l'angle de début de phase (24) et l'angle de fin de phase (26) sont modifiés dans une pleine onde (20) sur deux de la tension alternative (22) sinusoïdale.

3. Procédé selon la revendication 1 ou la revendication 2,
**caractérisé en ce que**
l'angle de début de phase (24) et/ou l'angle de fin de phase (26) d'une deuxième demi-onde (42) est/sont modifié(s) par rapport à une première demi-onde (40) de la même pleine onde (20).

4. Procédé selon la revendication 2 ou la revendication 3,
**caractérisé en ce que**,
lors de la première pleine onde (46), un début de phase ou une fin de phase est exécuté(e) et, dans la deuxième pleine onde (48), une fin de phase ou un début de phase est exécuté(e).

5. Procédé selon l'une des revendications précédentes,
**caractérisé en ce que**,
pour le pilotage du moteur électrique (14), un angle d'allumage, qui correspond à un angle de début de phase (24), est appelé et, en fonction de cet angle d'allumage ou d'un passage, par cet angle d'allumage, au-dessus ou au-dessous d'une valeur de seuil paramétrée ou paramétrable, une modification de l'angle de début de phase (24) et/ou de l'angle de fin de phase (26) est déterminée.

6. Procédé selon la revendication 5, avec une valeur de seuil proche de multiples de 90 degrés, en particulier dans la plage de 85 à 95 degrés.

7. Dispositif de commande (12) pour un moteur électrique (14) pour l'entraînement d'un ventilateur (16) dans un aspirateur (10), le moteur électrique (14) pouvant être mis en oeuvre avec une tension alternative (22) sinusoïdale, **caractérisé en ce que** le dispositif de commande (12) présente un circuit (18) pour le début de phase et la fin de phase de la tension alternative (22) sinusoïdale dans le cas d'un angle de début de phase et d'un angle de fin de phase (26) pour le pilotage du moteur électrique (14), ainsi que des moyens (28, 30) pour la modification périodique aussi bien de l'angle de début de phase (24) que de l'angle de fin de phase (26).

8. Dispositif de commande (12) selon la revendication 7, avec des moyens (28, 30) de modification de l'angle de début de phase (24) et de l'angle de fin de phase (26) dans une pleine onde (20) sur deux de la tension alternative (22) sinusoïdale.

9. Dispositif de commande (12) selon la revendication 7 ou la revendication 8, avec des moyens (28, 30) pour la modification de l'angle de début de phase (24) et de l'angle de fin de phase (26) d'une deuxième demi-onde (42) par rapport à une première demi-onde (40) de la même pleine onde (20).

10. Dispositif de commande (12) selon l'une des revendications 7 à 9, avec des moyens (28, 30) pour l'exécution d'un début de phase ou d'une fin de phase dans une première pleine onde (46) et d'une fin de phase ou d'un début de phase dans la deuxième pleine onde (48).

11. Dispositif de commande (12) selon l'une des revendications 7 à 10, avec un microprocesseur (32) pour l'appel d'un angle d'allumage, qui correspond à un angle de début de phase (24), à partir d'une mémoire (36) contenue dans le dispositif de commande (12) et pour la détermination de la modification de l'angle de début de phase (24) et/ou de l'angle de fin de phase (26) en fonction de cet angle d'allumage ou en fonction d'un passage, par cet angle d'allumage, au-dessus ou au-dessous d'une valeur de seuil paramétrée ou paramétrable.

12. Aspirateur (10) avec un moteur électrique (14) et un ventilateur (16) entraîné par le moteur électrique (14), **caractérisé par** un dispositif de commande (12) selon l'une des revendications 7 à 11 pour le moteur électrique (14).
